(19) Europäisches Patentamt / European Patent Office / Office européen des brevets

(11) **EP 3 313 627 B1**

(12) **EUROPÄISCHE PATENTSCHRIFT**

(45) Veröffentlichungstag und Bekanntmachung des Hinweises auf die Patenterteilung:
**11.06.2025  Patentblatt 2025/24**

(21) Anmeldenummer: **16731512.6**

(22) Anmeldetag: **20.06.2016**

(51) Internationale Patentklassifikation (IPC):
***B25J 9/16*** *(2006.01)*

(52) Gemeinsame Patentklassifikation (CPC):
**B25J 9/1666; B25J 9/1664;** G05B 2219/36043;
G05B 2219/39219; G05B 2219/40371;
G05B 2219/40519; G05B 2219/40521

(86) Internationale Anmeldenummer:
**PCT/EP2016/001050**

(87) Internationale Veröffentlichungsnummer:
**WO 2016/206798 (29.12.2016 Gazette 2016/52)**

(54) **ABFAHREN EINER VORGEGEBENEN BAHN MIT EINEM ROBOTER**

MOVING ALONG A PREDETERMINED TRACK WITH A ROBOT

TRANSPORT D'UNE VOIE PRÉDÉTERMINÉE AU MOYEN D'UN ROBOT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.06.2015  DE 102015008188**

(43) Veröffentlichungstag der Anmeldung:
**02.05.2018  Patentblatt 2018/18**

(73) Patentinhaber: **KUKA Deutschland GmbH**
**86165 Augsburg (DE)**

(72) Erfinder:
• **BURKHART, Stefan**
  **89407 Dillingen (DE)**
• **HAGENAUER, Andreas**
  **86316 Friedberg (DE)**
• **HÜTTENHOFER, Manfred**
  **86405 Meitingen (DE)**
• **SCHREITTMILLER, Robert**
  **86316 Stätzling (DE)**

(74) Vertreter: **Schlotter, Alexander Carolus Paul**
**Wallinger Ricker Schlotter Tostmann**
**Patent- und Rechtsanwälte Partnerschaft mbB**
**Zweibrückenstrasse 5-7**
**80331 München (DE)**

(56) Entgegenhaltungen:
EP-A1- 0 696 493          EP-B1- 0 696 493
WO-A1-2014/019706      US-A1- 2007 142 967
US-A1- 2013 345 867

**Beschreibung**

Die vorliegende Erfindung betrifft ein Verfahren zum wenigstens teilweise automatisierten Abfahren einer vorgegebenen Bahn mit einem Roboter, insbesondere zum wenigstens teilweise automatisierten synchronisierten Abfahren einer vorgegebenen Bahngruppe mit wenigstens zwei Robotern, ein System und ein Computerprogrammprodukt zur Durchführung des Verfahrens sowie eine Roboteranordnung mit dem System.

Nach betriebsinterner Praxis werden vorgegebene Bahnen mit Roboter abgefahren, indem vorgegebene Bahnabschnitte der Bahn, die beispielsweise durch Linear-, Circular- oder Splinebewegungen definiert sein können, sequentiell abgefahren werden, wobei eine Endposition eines vorhergehenden Bahnabschnitts eine Anfangsposition eines darauffolgenden Bahnabschnitts bilden kann. Ein Bahnabschnitt kann durch einen Befehlssatz eines Steuerprogramms vorgegeben sein, wobei ein Satzzeiger nacheinander Befehlssätze auswählt, deren Bahnabschnitte dann als jeweils aktueller Bahnabschnitt abgefahren werden.

Befindet sich der Roboter, insbesondere nach einer Unterbrechung beim Abfahren der Bahn, nicht (mehr) auf dem jeweils aktuellen, durch den Satzzeiger ausgewählten Bahnabschnitt, beispielsweise, weil nach der Unterbrechung der Roboter manuell verfahren, der aktuelle Bahnabschnitt manuell verändert oder manuell ein anderer der abgespeicherten Bahnabschnitte durch den Satzzeiger ausgewählt wurde, muss der Roboter zunächst (wieder) auf den (gegebenenfalls neuen) aktuellen Bahnabschnitt positioniert werden, bevor das Abfahren der Bahn bzw. des aktuellen Bahnabschnitts durchgeführt, insbesondere fortgesetzt werden kann.

Hierzu wird nach betriebsinterner Praxis bisher die Endposition des aktuellen Bahnabschnitts auf einer linearen Bahn angefahren, was auch als sogenannte SAK (Satzkoinzidenz)-Fahrt bezeichnet wird.

Dies kann jedoch, wenn die Endposition weit von der aktuellen Position des Roboters entfernt ist, zu langen Fahrten abseits der vorgegebenen Bahn führen, die vorab unbekannt sind und entsprechend gegenüber dem Abfahren einer vorgegebenen, insbesondere optimierten und/oder kollisionsfrei geplanten, Bahn nachteilig sein können.

Die US 2007/142967 A1 stellt ein Verfahren zum Steuern eines Roboterpfads bereit, das Bereitstellung eines Hauptpfads für die Bewegung des Roboters auf der Grundlage von Pfaddaten mit Punkten entlang des Hauptpfads und Bereitstellung eines sicheren Evakuierungspfads von jedem Punkt auf dem Hauptpfad, um zu einer sicheren Position zu gelangen, umfasst, wobei der Hauptweg unter Berücksichtigung von Überlegungen zum sicheren Evakuierungsweg gestaltet ist, sodass der Roboter an jedem Punkt des Fahrwegs sicher zu einem Sicherheitspunkt oder zur Entladeposition oder sicheren Position bewegt werden kann.

Aufgabe der vorliegenden Erfindung ist es, das Abfahren von Bahnen mit Robotern zu verbessern.

Diese Aufgabe wird durch ein Verfahren zum Abfahren einer vorgegebenen Bahn mit einem Roboter mit den Merkmalen des Anspruchs 1 gelöst. Ansprüche 8, 10, 12 und 13 stellen ein Verfahren zum synchronisierten Abfahren einer vorgegebenen Bahngruppe mit wenigstens zwei Robotern, ein System bzw. ein Computerprogrammprodukt zur Durchführung eines hier beschriebenen Verfahrens bzw. eine Roboteranordnung mit einem hier beschriebenen System unter Schutz. Die Unteransprüche betreffen vorteilhafte Weiterbildungen.

Nach einem Aspekt der vorliegenden Erfindung umfasst ein Verfahren zum wenigstens teilweise automatisierten Abfahren einer vorgegebenen, insbesondere abgespeicherten, Bahn mit einem bzw. durch einen Roboter, die Schritte:

- Ermitteln einer Aufsetzposition auf einem aktuellen Bahnabschnitt der vorgegebenen Bahn, für die eine Abstandskenngröße, welche auf Basis eines Abstands einer aktuellen Position des Roboters zu dem aktuellen Bahnabschnitt definiert ist, insbesondere ermittelt wird, eine vorgegebene Bedingung erfüllt, insbesondere ihr Wert kleiner oder gleich den Werten der Abstandskenngröße für alle Positionen in einem, insbesondere zu der Aufsetzposition komplementären Teilbereich des aktuellen Bahnabschnitts ist; und
- Anfahren der Aufsetzposition mit dem Roboter, sofern bzw. in Abhängigkeit davon, ob eine Aufsetzbedingung erfüllt ist.

Ein System zum wenigstens teilweise automatisierten Abfahren einer vorgegebenen Bahn mit einem bzw. durch einen Roboter nach einem Aspekt der vorliegenden Erfindung, insbesondere ein System, insbesondere eine Steuerung, einer Roboteranordnung mit einem oder mehreren Robotern nach einem Aspekt der vorliegenden Erfindung, ist hard- und/oder softwaretechnisch zur Durchführung eines hier beschriebenen Verfahrens eingerichtet und/oder weist auf:

- Mittel zum Ermitteln einer Aufsetzposition auf einem aktuellen Bahnabschnitt der vorgegebenen Bahn, für die eine Abstandskenngröße, welche auf Basis eines Abstands einer aktuellen Position des Roboters zu dem aktuellen Bahnabschnitt definiert ist, insbesondere ermittelt wird, eine vorgegebene Bedingung erfüllt, insbesondere ihr Wert kleiner oder gleich den Werten der Abstandskenngröße für alle Positionen in einem, insbesondere zu der Aufsetzposition komplementären Teilbereich des aktuellen Bahnabschnitts ist; und
- Mittel zum Anfahren der Aufsetzposition mit dem Roboter, insbesondere, sofern bzw. in Abhängigkeit davon, ob eine Aufsetzbedingung erfüllt ist.

Der Roboter bzw. wenigstens einer der Roboter der Roboteranordnung weist in einer Ausführung wenigstens drei, insbesondere wenigstens sechs, insbesondere aktuierbare bzw., insbesondere motorisch, aktuierte, Gelenke bzw. Achsen, insbesondere Drehgelenke bzw. -achsen, auf. In einer Ausführung weist der Roboter einen (Roboter)Arm mit wenigstens sechs Achsen und/oder eine oder mehrere aktive bzw. aktuierbare und/oder passive bzw. antriebslose Zusatzachsen zur Bewegung einer Roboterbasis relativ zur Umgebung auf.

Eine Position eines Roboters umfasst bzw. beschreibt in einer Ausführung eine, insbesondere dreidimensionale, Lage und/oder Orientierung einer roboterfesten Referenz, insbesondere seines Tool Center Points, und/oder, insbesondere bei redundanten Robotern oder singulären Posen, eine eindeutige Pose, und/oder eine Achs- bzw. Gelenkstellung bzw. -koordinate einer oder mehrerer, insbesondere aller, Achsen des Roboters, insbesondere einer oder mehrerer, insbesondere aller, Achsen eines Arms des Roboters und/oder Zusatzachsen des Roboters, in denen eine Basis des Arms, insbesondere aktuierbar bzw., insbesondere motorisch, aktuiert, beweglich ist. Die Position kann somit gleichermaßen im (kartesischen) Arbeitsraum oder im Gelenkkoordinaten- bzw. Achsraum des Roboters angegeben sein bzw. werden. Entsprechend werden Komponenten der, insbesondere mehr-, insbesondere wenigstens sechsdimensionalen, Position, vorliegend allgemein als Koordinaten des Roboters bezeichnet, sie können insbesondere Gelenkkoordinaten, insbesondere -winkel, Lagekoordinaten, Orientierungswinkel wie insbesondere EULER- oder KARDAN-Winkel, Denavit-Hartenberg-Parameter, Quaternionen oder dergleichen umfassen, insbesondere sein.

Eine bzw. die vorgegebene bzw. abgespeicherte Bahn umfasst in einer Ausführung einen oder mehrere vorgegebene, insbesondere abgespeicherte, Bahnschnitte. Ein Bahnabschnitt umfasst in einer Ausführung eine oder mehrere vorgegebene, insbesondere abgespeicherte, Positionen des Roboters und/oder deren Verbindung, die in einer Weiterbildung linear, circular bzw. (teil)kreisförmig oder durch Splines definiert bzw. vorgegeben sein bzw. werden kann. In einer Ausführung wird bzw. ist ein Bahnabschnitt durch einen Befehlssatz eines Steuerprogramms vorgegeben, beispielsweise LIN($x$), SPLINE($x_1$, $x_2$,...) oder dergleichen mit Positionen $x,...x_2 \in \Re^{DOF}$ im Arbeits- oder Gelenkwinkelraum und der Freiheitsgradanzahl DOF des Roboters.

Ein bzw. der aktuelle(r) Bahnabschnitt ist ein aktuell bzw. als nächstes abzufahrender Bahnabschnitt der vorgegebenen Bahn. Er bzw. der ihn vorgebende Befehlssatz kann insbesondere durch einen Satzzeiger ausgewählt werden bzw. sein, der in einer Weiterbildung automatisch nacheinander verschiedene Bahnabschnitte bzw. Befehlssätze auswählt, um die vorgegebene Bahn mit dem Roboter abzufahren, und/oder manuell bzw. bedienerkommandiert auf einen anderen bzw. beliebigen Bahnabschnitt bzw. Befehlssatz gesetzt bzw. umgeschaltet werden kann, insbesondere wird.

Der Abstand einer Position zu einem Bahnabschnitt kann in einer Ausführung von einem, insbesondere kartesischen bzw. euklidischen, insbesondere minimalen bzw. senkrechten, Abstand der Position zu dem Bahnabschnitt abhängen bzw. diesen beschreiben, insbesondere im Arbeits- oder Gelenkkoordinatenraum. In einer Ausführung ist der Abstand der Betrag bzw. die euklidische Norm bzw. Länge des mehrdimensionalen Vektors, insbesondere im Arbeits- oder Gelenkkoordinatenraum, von der Position auf den Bahnabschnitt, der senkrecht auf dem Bahnabschnitt steht. Die Abstandskenngröße kann in einer Ausführung eine ein- oder mehrdimensionale Größe sein, die von dem Abstand, insbesondere linear, abhängt bzw. ihn (mathematisch) beschreibt. In einer Weiterbildung kann die Abstandskenngröße eine, insbesondere gewichtete, Norm, insbesondere Summe, der Differenzen zwischen einer oder mehreren, insbesondere allen, Koordinaten des Roboters und des Bahnabschnitts aufweisen, insbesondere sein.

Wird allgemein eine Position des Roboters durch die Koordinaten $x = [x_1,...,x_n]$, beispielsweise die Lage [$x_1$ = x, $x_2$ = y, $x_3$ = z] und Orientierung [$x_4$ = $\alpha$, $x_5$ = $\beta$, $x_6$ = $\gamma$] seines TCPs oder seine Gelenkwinkel [$q_1$,..., $q_6$], und ein Bahnabschnitt entsprechend durch eine Relation, insbesondere Funktion, $Y(s) = [Y_1(s),...,Y_n(s)]$ mit dem Bahnparameter s beschrieben, so kann der Abstand bzw. die Abstandskenngröße $d(s)$ insbesondere definiert sein als $d(s) = \sum w_i \cdot |x_i - Y_i(s)|$ mit dem Gewichtungsfaktoren $w_i$, oder auch eine andere Norm, beispielsweise eine Maximumsnorm, über $x$, $Y$, insbesondere ($x$-$Y$), beispielsweise $d(s) = Max(w_i \cdot |x_i - Y_i(s)|)$. In einer Ausführung sind die Gewichtungsfaktoren $w_i$ alle ungleich 0, insbesondere gleich 1, in einer anderen Ausführung können ein oder mehrere Gewichtungsfaktoren $w_i$ bis auf wenigstens einen Gewichtungsfaktor auch gleich 0 sein.

Durch die Ermittlung einer Aufsetzposition, die eine vorgegebene Bedingung erfüllt, kann ein Roboter vorteilhaft, insbesondere wieder oder erstmals, auf den aktuellen Bahnabschnitt positioniert werden.

Die Abstandskenngröße erfüllt für eine (Aufsetz)Position bzw. die Abstandskenngröße der (Aufsetz)Position, die vorgegebene Bedingung (nur), falls bzw. sofern sie bzw. ihr Wert kleiner oder gleich der Abstandskenngröße bzw. dem Wert der Abstandskenngröße für alle Positionen in einem Teilbereich des aktuellen Bahnabschnitts bzw. den (Werten der) Abstandskenngröße(n) aller Positionen in einem Teilbereich des aktuellen Bahnabschnitts ist, insbesondere eine minimale Abstandskenngröße in dem aktuellen Bahnabschnitt ist. Mit anderen Worten kann als Aufsetzposition eine Position auf dem aktuellen Bahnabschnitt ermittelt werden, die der aktuellen Position wenigstens so nahe wie, insbesondere näher als, alle Positionen in einem Teilbereich des aktuellen Bahnabschnitts ist. Hierdurch kann vorteilhaft eine kurze Anfahrt der Aufsetzposition erreicht werden. Weisen wenigstens zwei Positionen in einem Teilbereich des aktuellen Bahnabschnitts dieselben minimalen (Werte der) Abstandskenngröße(n) auf, so kann in einer Ausführung unter diesen Positionen als Aufsetzposition diejenige gewählt werden, die eine zusätzliche Bedingung erfüllt, insbesondere eine Position, die einem Anfang oder Ende des aktuellen Bahnabschnitts oder einer abgespeicherten Rückkehrposition am nächsten liegt oder dergleichen.

In einer Weiterbildung ist der Teilbereich des aktuellen Bahnabschnitts zu der Aufsetzposition komplementär, bzw. bilden Teilbereich und Aufsetzposition gemeinsam den gesamten aktuellen Bahnabschnitt. Mit anderen Worten erfüllt die Abstandskenngröße einer (Aufsetz)Position in einer Ausführung die vorgegebene Bedingung (nur), falls bzw. sofern sie kleiner oder gleich der Abstandskenngröße aller anderen Positionen des aktuellen Bahnabschnitts ist, bzw. falls bzw. sofern sie minimal ist. Entsprechend wird in einer Ausführung die Aufsetzposition auf dem aktuellen Bahnabschnitt der vorgegebenen Bahn ermittelt, für die (der Wert) eine(r) Abstandskenngröße, welche auf Basis eines Abstands einer aktuellen Position des Roboters zu dem aktuellen Bahnabschnitt definiert ist, minimal ist, bzw. ist das Mittel zum Ermitteln einer Aufsetzposition hierzu eingerichtet. Hierdurch kann vorteilhaft eine kürzeste Anfahrt der Aufsetzposition erreicht werden.

In einer Ausführung kann die Aufsetzbedingung eine Abweichung der aktuellen Position des Roboters von dem aktuellen Bahnabschnitt umfassen, insbesondere nicht erfüllt sein, sofern eine Abweichung der aktuellen Position des Roboters von dem aktuellen Bahnabschnitt einen vorgegebenen, ein- oder mehrdimensionalen, (ersten) Grenzwert unterschreitet, der in einer Ausführung, wenigstens im Rahmen der Rechen- und/oder der Positioniergenauigkeit, gleich Null oder größer als Null sein kann. Die Abweichung kann in einer Ausführung in gleicher Weise definiert sein bzw. ermittelt werden wie die Abstandskenngröße. Mit anderen Worten ist die Aufsetzbedingung in einer Ausführung nicht erfüllt, falls die aktuelle Position auf dem aktuellen Bahnabschnitt liegt.

Hierdurch kann der Roboter vorteilhaft aus seiner aktuellen Position (weiter) auf dem aktuellen Bahnabschnitt verfahren werden, sofern seine aktuelle Position bereits ausreichend nahe zu dem aktuellen Bahnabschnitt, insbesondere auf dem aktuellen Bahnabschnitt liegt.

Zusätzlich oder alternativ kann die Aufsetzbedingung eine Abweichung einer, insbesondere bei einer (vorhergehenden) Unterbrechung des Abfahrens der vorgegebenen Bahn, abgespeicherten Rückkehrposition des Roboters von dem aktuellen Bahnabschnitt umfassen, insbesondere nicht erfüllt sein, sofern eine Abweichung der Rückkehrposition des Roboters von dem aktuellen Bahnabschnitt einen vorgegebenen, ein- oder mehrdimensionalen, (zweiten) Grenzwert unterschreitet, der in einer Ausführung, wenigstens im Rahmen der Rechen- und/oder Positioniergenauigkeit, gleich Null oder größer als Null sein kann. Mit anderen Worten ist die Aufsetzbedingung in einer Ausführung nicht erfüllt, falls die Rückkehrposition auf dem aktuellen Bahnabschnitt liegt.

Die Abweichung kann in einer Ausführung in gleicher Weise definiert sein bzw. ermittelt werden wie die Abstandskenngröße. Entspricht der aktuelle Bahnabschnitt nicht (mehr) dem Bahnabschnitt, auf dem die abgespeicherte Rückkehrposition liegt bzw. für den diese abgespeichert worden ist bzw. der die Rückkehrposition aufweist, beispielsweise aufgrund einer Modifikation dieses Bahnabschnitts oder eines Sprungs zu einem anderen abgespeicherten Bahnabschnitt, so überschreitet in einer Ausführung die Abweichung der Rückkehrposition von dem (neuen) aktuellen Bahnabschnitt den (zweiten) Grenzwert. Mit anderen Worten ist in einer Ausführung die Aufsetzbedingung nicht erfüllt, falls bzw. sofern der aktuelle Bahnabschnitt die abgespeicherte Rückkehrposition aufweist.

In einer Weiterbildung wird bzw. ist als die Rückkehrposition eine, insbesondere letzte, Position des Roboters auf der Bahn vor der Unterbrechung abgespeichert.

Hierdurch kann der Roboter vorteilhaft aus seiner aktuellen Position auf seine zuletzt gespeicherte (Rückkehr)Position auf dem aktuellen Bahnabschnitt und von dort auf dem aktuellen Bahnabschnitt verfahren werden, sofern die Rückkehrposition noch ausreichend nahe zu dem aktuellen Bahnabschnitt, insbesondere noch auf dem aktuellen Bahnabschnitt liegt.

In einer Ausführung wird die Rückkehrposition, insbesondere auf einer linearen Bahn im Arbeits- oder Gelenkkoordinatenraum und somit vorteilhaft auf besonders kurzem Weg, angefahren, falls bzw. sofern die Abweichung der Rückkehrposition des Roboters von dem aktuellen Bahnabschnitt den vorgegebenen (zweiten) Grenzwert unterschreitet, insbesondere (nur), falls bzw. sofern die Abweichung der aktuellen Position des Roboters von dem aktuellen Bahnabschnitt den vorgegebenen (ersten) Grenzwert nicht unterschreitet. Entsprechend weist das System in einer Ausführung Mittel zum Anfahren der Rückkehrposition, insbesondere auf einer linearen Bahn im Arbeits- oder Gelenkkoordinatenraum, falls bzw. sofern die Abweichung der Rückkehrposition des Roboters von dem aktuellen Bahnabschnitt den vorgegebenen (zweiten) Grenzwert unterschreitet, insbesondere (nur), falls bzw. sofern die Abweichung der aktuellen Position des Roboters von dem aktuellen Bahnabschnitt den vorgegebenen (ersten) Grenzwert nicht unterschreitet, auf.

In einer Ausführung wird bzw. ist der aktuelle Bahnabschnitt durch, insbesondere manuelle bzw. bedienerkommandierte, Modifikation bzw. Ver- bzw. Abänderung, insbesondere Substitution bzw. Ersetzung, eines abgespeicherten Bahnabschnitts der vorgegebenen Bahn vorgegeben. Mit anderen Worten kann der Roboter vorteilhaft auf die Aufsetzposition und somit den aktuellen Bahnabschnitt positioniert werden, wenn seine aktuelle und/oder Rückkehrposition aufgrund einer Modifikation eines aktuellen Bahnabschnitts von diesem abweicht.

In einer Ausführung wird bzw. ist der aktuelle Bahnabschnitt durch einen, insbesondere manuellen bzw. bedienerkommandierten, Sprung zu einem abgespeicherten Bahnabschnitt der vorgegebenen Bahn vorgegeben. Mit anderen Worten kann der Roboter vorteilhaft auf die Aufsetzposition und somit den (neuen) aktuellen Bahnabschnitt positioniert werden, wenn seine aktuelle und/oder Rückkehrposition aufgrund eines Sprungs insbesondere des Satzzeigers zu einem anderen Bahnabschnitt bzw. Befehlssatz von dem (bisher) aktuellen abweicht.

In einer Ausführung kann der aktuelle Bahnabschnitt auch ein erster Bahnabschnitt der vorgegebenen Bahn sein. Mit anderen Worten kann das Verfahren auch zum, insbesondere erstmaligen oder Wiederanfahren, der vorgegebenen Bahn vor deren Abfahren verwendet werden.

In einer Ausführung wird die Aufsetzposition mit dem Roboter auf einer linearen Bahn im Arbeits- oder Gelenkkoordinatenraum und somit vorteilhaft auf besonders kurzem Weg angefahren. Entsprechend weist das System in einer Ausführung Mittel zum Anfahren der Aufsetzposition auf einer linearen Bahn im Arbeits- oder Gelenkkoordinatenraum auf.

In einer Ausführung wird die Aufsetzposition mit dem Roboter angefahren und/oder der Roboter von der Aufsetzposition zu einer End- bzw. Zielposition des aktuellen Bahnabschnitts auf dem aktuellen Bahnabschnitt verfahren, insbesondere (erst), wenn er einen entsprechenden Startbefehl erhält. Entsprechend weist das System in einer Ausführung Mittel zum Eingeben eines Startbefehls und/oder Mittel zum Anfahren der Aufsetzposition und/oder einer End- bzw. Zielposition des aktuellen Bahnabschnitts mit dem Roboter auf dem aktuellen Bahnabschnitt, insbesondere (erst) infolge eines entsprechenden Startbefehls, auf. Hierdurch kann in einer Ausführung vorteilhaft nach Erreichen der Aufsetzposition, welches insbesondere auf kürzestem Wege erfolgen kann, dann weiter auf der vorgegebenen Bahn gefahren und somit diese vorteilhaft so weit wie möglich verwendet bzw. genutzt werden.

Nach einem Aspekt der vorliegenden Erfindung werden eine vorgegebene erste Bahn einer vorgegebenen Bahngruppe mit einem bzw. durch einen ersten Roboter einer bzw. der Roboteranordnung nach einem hier beschriebenen Verfahren abgefahren, insbesondere wenigstens bei erfüllter Aufsetzbedingung die Aufsetzposition ermittelt und angefahren, und, insbesondere zeitlich, synchronisiert zu dieser vorgegebenen Bahn eine oder mehrere weitere vorgegebene Bahnen der Bahngruppe mit einem bzw. durch einen bzw. mehrere(n) weitere(n) Roboter(n) der Roboteranordnung abgefahren.

Ein System zum wenigstens teilweise automatisierten Abfahren einer vorgegebenen Bahngruppe mit bzw. durch wenigstens zwei Roboter(n) nach einem Aspekt der vorliegenden Erfindung, insbesondere ein System, insbesondere eine Steuerung, der Roboteranordnung, ist entsprechend hard- und/oder softwaretechnisch zur Durchführung eines hier beschriebenen Verfahrens eingerichtet und/oder weist auf:

- ein hier beschriebenes System zum wenigstens teilweise automatisierten Abfahren einer vorgegebenen Bahn mit einem ersten der Roboter; und
- Mittel zum synchronisierten Abfahren einer oder mehrerer weiterer vorgegebener Bahnen der Bahngruppe mit einem bzw. mehreren weiteren Robotern der Roboteranordnung.

Unter einem synchronisierten Abfahren von Bahnen wird vorliegend insbesondere verstanden, dass wenigstens kein Roboter eine vorgegebene Synchronisierposition auf seiner vorgegebenen Bahn überfährt, bis der bzw. die anderen Roboter der Roboteranordnung die dieser Synchronisierposition zugeordneten bzw. mit ihr synchronisierten Synchronisierpositionen auf ihren vorgegebenen Bahnen erreicht haben, insbesondere ein Abfahren der Bahnen derart, dass die Roboter die einander zugeordneten Synchronisierpositionen auf ihren vorgegebenen Bahnen, wenigstens im Wesentlichen, insbesondere - im Rahmen der Genauigkeit des bzw. der Roboter(s) - exakt, zeitgleich erreichen. Dies kann insbesondere durch eine entsprechende Vorgabe eines Geschwindigkeitsprofils $\frac{ds}{dt}(s)$ mit der Zeitableitung d/dt des Bahnparameters s oder eine geometrische Kopplung der Bahnen realisiert werden.

Ein oder mehrere der weiteren Roboter können in einer Ausführung jeweils an einer vorgegebenen Synchronisierposition, beispielsweise einer Endposition eines Bahnabschnitts, abwarten, bis der erste Roboter eine dieser bzw. diesen Synchronisierposition(en) zugeordnete Synchronisierposition auf der ersten Bahn erreicht, nachdem er die Aufsetzposition angefahren hat.

Dabei kann es jedoch vorkommen, dass der erste Roboter diese zugeordnete Synchronisierposition auf der ersten Bahn nicht (mehr) erreicht, beispielsweise, weil diese auf einem übersprungenen oder geänderten Bahnabschnitt liegt.

Insbesondere daher wird in einer Ausführung (jeweils) eine zu der Aufsetzposition des ersten Roboters synchronisierte weitere Aufsetzposition des bzw. der weiteren Roboter auf der bzw. den weiteren Bahn(en) ermittelt und mit dem bzw. den weiteren Robotern angefahren. Eine synchronisierte weitere Aufsetzposition kann insbesondere derart ermittelt werden bzw. definiert sein, dass die Roboter wenigstens vorgegebene, diesen Aufsetzpositionen in Durchfahrtrichtung bzw. -sinn benachbarte Synchronisierpositionen auf ihren jeweiligen vorgegebenen Bahnen bzw. Bahnabschnitten synchronisiert, insbesondere zeitgleich, erreichen, wenn sie gemeinsam in ihren (synchronisierten) Aufsetzpositionen starten und ihre vorgegebenen Bahnen abfahren, insbesondere ihre jeweiligen vorgegebenen Bahnen bzw. Bahnabschnitten ausgehend von ihren synchronisierten Aufsetzpositionen geometrisch gekoppelt sind.

In einer Weiterbildung wird wenigstens eine synchronisierte weitere Aufsetzposition auf der weiteren Bahn angefahren. Hierdurch kann vorteilhaft die vorgegebene weitere Bahn genutzt werden. In einer Weiterbildung wird wenigstens eine synchronisierte weitere Aufsetzposition auf einer linearen Bahn im Arbeits- oder Gelenkkoordinatenraum angefahren. Hierdurch kann vorteilhaft die synchronisierte weitere Aufsetzposition auf kurzem Wege angefahren werden.

Entsprechend weist in einer Ausführung das System Mittel zum Ermitteln einer zu der Aufsetzposition des ersten Roboters synchronisierten weiteren Aufsetzposition wenigstens eines weiteren Roboters auf seiner weiteren Bahn und Mittel zum Anfahren dieser weiteren Aufsetzposition(en) mit dem bzw. den weiteren Roboter(n), insbesondere auf der bzw. den weiteren Bahn(en) oder auf (einer) linearen Bahn(en) im Arbeits- oder Gelenkkoordinatenraum, auf.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die CPU die Schritte solcher Verfahren ausführen kann und damit insbesondere den bzw. die Roboter(anordnung) steuern kann.

Ein oder mehrere Schritte eines hier beschriebenen Verfahrens werden in einer Ausführung vollständig oder teilweise automatisiert durchgeführt.

Weitere Vorteile und Merkmale ergeben sich aus den Unteransprüchen und den Ausführungsbeispielen. Hierzu zeigt, teilweise schematisiert:

Fig. 1:  das Abfahren einer Bahngruppe mit einer Roboteranordnung nach einer Ausführung der vorliegenden Erfindung; und

Fig. 2:  den Ablauf des Verfahrens.

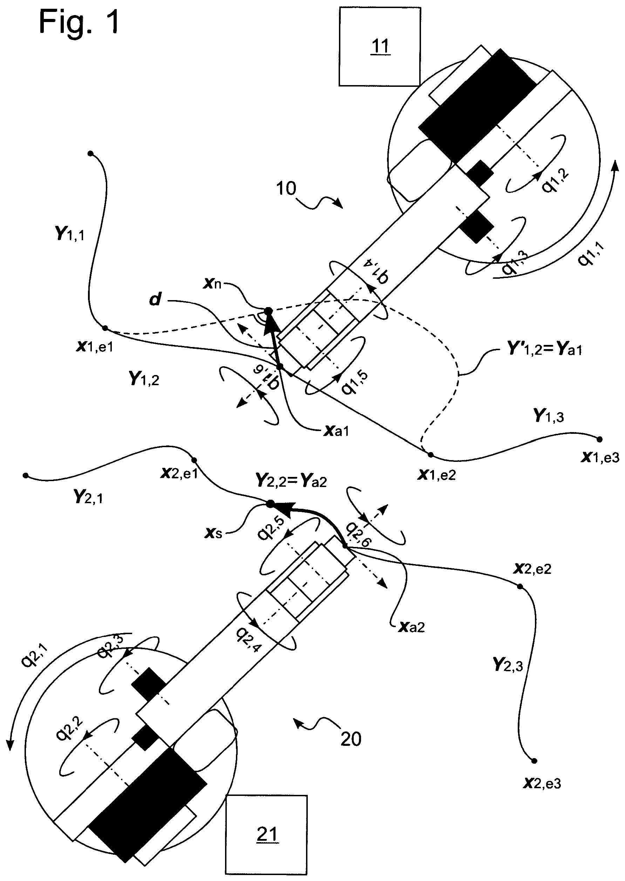

Fig. 1 zeigt das Abfahren einer vorgegebenen Bahngruppe mit einer Roboteranordnung nach einer Ausführung der vorliegenden Erfindung.

Die Roboteranordnung weist exemplarisch einen ersten Roboter 10 mit einer Steuerung 11 und einen weiteren Roboter 20 mit einer Steuerung 21 auf, die zusammen ein System zur Durchführung eines Verfahrens zum synchronisierten Abfahren der Bahngruppe mit den zwei Robotern 10, 20 nach einer Ausführung der vorliegenden Erfindung bilden.

Die Roboter 10, 20 weisen exemplarisch jeweils sechs Bewegungs(dreh)achsen auf, deren Stellungen durch die Gelenkkoordinaten $q_{1,1},...,q_{1,6}$ bzw. $q_{2,1},...,q_{2,6}$ beschrieben werden. Diese Gelenkkoordinaten oder die dreidimensionale Lage und Orientierung eines in Fig. 1 jeweils strichpunktiert angedeuteten TCPs sind bzw. beschreiben Koordinaten bzw. Positionen x des jeweiligen Roboters.

Für den ersten Roboter 10 ist eine Bahn vorgeben bzw. in seiner Steuerung 11 abgespeichert, die aufeinanderfolgende Bahnabschnitte $Y_{1,1},...,Y_{1,3}$ umfasst. Jeder dieser Bahnabschnitte ist insbesondere durch einen entsprechenden Befehlssatz eines in der Steuerung 11 abgespeicherten Steuerprogramms vorgegeben und weist eine End- bzw. Zielposition $x_{1,e1}$, $x_{1,e2}$ bzw. $x_{1,e3}$ auf.

Für den weiteren Roboter 20 ist analog eine Bahn vorgegeben bzw. in seiner Steuerung 21 abgespeichert, die aufeinanderfolgende Bahnabschnitte $Y_{2,1},..., Y_{2,3}$ umfasst. Jeder dieser Bahnabschnitte ist analog durch einen entsprechenden Befehlssatz eines in der Steuerung 21 abgespeicherten Steuerprogramms vorgegeben und weist eine End- bzw. Zielposition $x_{2,e1}$, $x_{2,e2}$ bzw. $x_{2,e3}$ auf.

Die vorgegebenen Bahnen { $Y_{1,1},..., Y_{1,3}$}, {$Y_{2,1},..., Y_{2,3}$} werden synchronisiert so abgefahren, dass die Roboter 10, 20 jeweils die Endpositionen der jeweiligen Bahnabschnitte zeitgleich erreichen. Mit anderen Worten sind die Endpositionen im Ausführungsbeispiel exemplarisch als Synchron(isier)positionen gewählt.

Exemplarisch wurde das Abfahren der Bahngruppe unterbrochen und der gespeicherte, gerade vom Roboter 10 abgefahrene Bahnabschnitt $Y_{1,2}$ zu einem neuen Bahnabschnitt $Y'_{1,2}$ modifiziert, der in Fig. 1 gestrichelt angedeutet ist und nun den (neuen) aktuellen Bahnabschnitt $Y_{a1}$ des ersten Roboters 10 darstellt, der durch manuelle bzw. bedienerkommandierte Modifikation des abgespeicherten Bahnabschnitts $Y_{1,2}$ der vorgegebenen Bahn {$Y_{1,1},...,Y_{1,3}$} vorgegeben worden ist.

Der aktuelle Bahnabschnitt $Y_{a2}$ des zweiten Roboters 20 ist der (unveränderte) gespeicherte Bahnabschnitt $Y_{2,2}$.

Aufgrund dieser Modifikation liegt die aktuelle Position $x_{a1}$ des ersten Roboters 10 nicht mehr auf dessen aktuellem Bahnabschnitt $Y_{a1}$.

Eine analoge Situation könnte sich dadurch ergeben, dass ein Bediener einen Sprung eines Satzzeigers im Steuerprogramm des ersten Roboters 10 kommandiert oder den ersten Roboter 10 manuell in eine andere Position steuert.

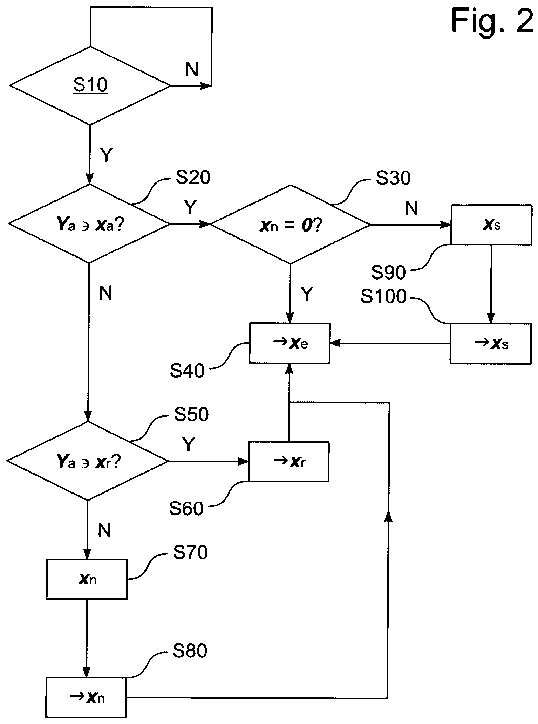

Mit Bezug auf Fig. 2 wird nun ein von dem System 11, 21 durchgeführtes Verfahren nach einer Ausführung der vorliegenden Erfindung näher erläutert. Das System 11, 21 weist hierzu entsprechend eingerichtete soft- und/oder hardwaretechnische Mittel auf.

In einem ersten Schritt S10 wird festgestellt, ob eine Unterbrechung des Abfahrens der Bahngruppe vorliegt oder nicht. Liegt keine Unterbrechung vor (S10: "N"), wiederholt das System bzw. Verfahren den Schritt S10.

Liegt eine Unterbrechung vor (S10: "Y"), fährt das System bzw. Verfahren mit Schritt S20 fort.

In diesem prüft es, ob eine aktuelle Position $x_a$ des jeweiligen Roboters noch auf dem aktuellen Bahnabschnitt $Y_a$ liegt oder nicht, indem es eine Abweichung der aktuellen Position des Roboters von dem aktuellen Bahnabschnitt ermittelt und prüft, ob diese einen ersten Grenzwert unterschreitet.

Für den ersten Roboter 10 ist dies, wie vorstehend mit Bezug auf Fig. 1 erläutert, nicht der Fall (S20: "N"), so dass das System bzw. Verfahren mit Schritt S50 fortfährt.

In diesem Schritt prüft es, ob eine bei der Unterbrechung des Abfahrens der Bahngruppe abgespeicherte Rückkehrposition $x_r$, die im Ausführungsbeispiel aufgrund der Modifikation des Bahnabschnitts jeweils der aktuellen Position $x_a$ entspricht, noch auf dem jeweils aktuellen Bahnabschnitt $Y_a$ liegt oder nicht, indem es eine Abweichung der abgespeicherten Rückkehrposition des Roboters von dem aktuellen Bahnabschnitt ermittelt und prüft, ob diese einen zweiten Grenzwert unterschreitet.

Für den ersten Roboter 10 ist dies, wie vorstehend mit Bezug auf Fig. 1 erläutert, ebenfalls nicht der Fall (S50: "N"), so dass das System bzw. Verfahren mit Schritt S70 fortfährt.

In diesem ermittelt das System bzw. Verfahren für den ersten Roboter 10 eine Aufsetzposition $x_n$ auf dem aktuellen Bahnabschnitt $Y_{a1}$ der vorgegebenen Bahn, für die eine Abstandskenngröße $d$, welche auf Basis eines Abstands der aktuellen Position $x_{a1}$ des ersten Roboters 10 zu dem aktuellen Bahnabschnitt $Y_{a1}$ ermittelt wird, minimal und somit kleiner als für den zu der Aufsetzposition $x_n$ komplementären Teilbereich $Y_{a1} \backslash x_n$ des aktuellen Bahnabschnitts $Y_{a1}$ ist.

Die Abstandskenngröße $d$ ist im Ausführungsbeispiel der, in einer Ausführung komponentenweise gewichtete, Betrag des Vektors $d$ von der aktuellen Position $x_{a1}$ auf den aktuellen Bahnabschnitt $Y_{a1}$, der auf dem aktuellen Bahnabschnitt $Y_{a1}$ senkrecht steht, wie in Fig. 1 angedeutet.

Dabei sei nochmals darauf hingewiesen, dass die Position $x$ jeweils sechsdimensional die Lage und Orientierung des TCPs beschreibt, beispielsweise also die Position im Gelenkwinkel- bzw. Achsraum sein kann. Entsprechend kann $d$ insbesondere gemäß

$$d = \sqrt{\left( d_1^2 + d_2^2 + d_3^2 + d_4^2 + d_5^2 + d_6^2 \right)}$$

berechnet werden, wobei $d_1, \ldots, d_6$ die Komponenten des Vektors $d$ im Gelenkwinkel- bzw. Achsraum darstellen.

Gleichermaßen kann die Position $x$, wiederum rein exemplarisch, auch die drei Lagekoordinaten x, y, z und den schiefsymmetrischen Anteil der Transformationsmatrix zwischen dem TPC und einem umgebungsfesten Basiskoordinatensystem umfassen, der die Orientierung des TPCs beschreibt. Entsprechend kann der Vektor $d$ auch im Arbeitsraum dargestellt sein.

Die Aufsetzposition $x_n$ kann insbesondere auch dadurch gefunden werden bzw. definiert sein, dass eine, gegebenenfalls durch Gewichtungsfaktoren deformierte bzw. in Koordinatenrichtungen skalierte, Hypersphäre um die aktuelle Position in einem gemeinsamen Raum, in dem die Bahn vorgegeben oder in den diese transformiert ist, und in dem die aktuelle Position bekannt bzw. ermittelt ist, solange vergrößert wird, bis sie die Bahn zum ersten Mal berührt, wobei der Berührpunkt dann die Aufsetzposition $x_n$ ist.

Anschließend wird in einem Schritt S80 die Aufsetzposition $x_n$ mit dem ersten Roboter 10 auf einer linearen Bahn im Arbeits- oder Gelenkkoordinatenraum angefahren, sobald er bzw. die Roboteranordnung einen entsprechenden Startbefehl erhält.

Von der Aufsetzposition wird der erste Roboter 10 dann in einem Schritt S40 zu der Endposition $x_{1,e2}$ des aktuellen Bahnabschnitts $Y_{a1}$ auf dem aktuellen Bahnabschnitt $Y_{a1}$ verfahren.

Ergibt die Prüfung in Schritt S50 hingegen, dass die bei der Unterbrechung des Abfahrens der Bahngruppe abgespeicherte Rückkehrposition $x_r$ noch auf dem jeweils aktuellen Bahnabschnitt $Y_a$ liegt (S50: "Y"), da die Abweichung der abgespeicherten Rückkehrposition von dem aktuellen Bahnabschnitt den zweiten Grenzwert unterschreitet, beispielsweise, weil der erste Roboter 10 bei unverändertem Bahnabschnitt $Y_{1,2}$ lediglich manuell aus seiner abgespeicherten Rückkehrposition $x_r$ in seine aktuelle Position $x_a$ verfahren wurde, so wird in einem Schritt S60 diese Rückkehrposition $x_r$ mit dem Roboter auf einer linearen Bahn im Arbeits- oder Gelenkkoordinatenraum angefahren.

Von der Rückkehrposition $x_r$ wird der Roboter dann in Schritt S40 wiederum zu der Endposition $x_e$ des aktuellen Bahnabschnitts auf dem aktuellen Bahnabschnitt verfahren.

Ergibt die Prüfung in Schritt S20, dass die aktuelle Position $x_a$ noch auf dem aktuellen Bahnabschnitt $Y_a$ liegt (S20: "Y"), fährt das System bzw. Verfahren mit Schritt S30 fort.

Für den zweiten Roboter 20 ist dies, wie vorstehend mit Bezug auf Fig. 1 erläutert, der Fall (S20: "Y").

In Schritt S30 prüft das System bzw. Verfahren, ob für einen anderen Roboter der Roboteranordnung eine Aufsetzposition $x_n$ ermittelt worden ist.

Wie vorstehend erläutert, ist dies mit Bezug auf den weiteren Roboter 20 der Fall, da für den ersten Roboter 10 die Aufsetzposition $x_n$ ermittelt worden ist.

Entsprechend (S30: "N") fährt das System bzw. Verfahren mit Schritt S90 fort.

In diesem ermittelt es für den zweiten Roboter 20 eine zu der Aufsetzposition $x_n$ des ersten Roboters 10 synchronisierte weitere Aufsetzposition $x_s$ des weiteren Roboters 20 auf der weiteren Bahn $\{Y_{2,1},...,Y_{2,3}\}$. Diese wird derart ermittelt, dass der erste Roboter 10, ausgehend von seiner Aufsetzposition $x_n$, auf seiner Bahn $\{Y_{1,1}, Y'_{1,2}, Y_{2,3}\}$ und der zweite Roboter 20, ausgehend von dessen weiterer Aufsetzposition $x_s$, auf der weiteren Bahn $\{Y_{2,1},...,Y_{2,3}\}$ die jeweiligen nächsten Synchronisierungspunkte $x_{1,e2}$, $x_{2,e2}$, zeitgleich erreichen.

Anschließend wird in einem Schritt S100 mit dem weiteren Roboter 20 auf seiner weiteren Bahn $\{Y_{2,1},..., Y_{2,3}\}$ diese weitere Aufsetzposition $x_s$ angefahren, wie in Fig. 1 angedeutet.

Von dort wird dann wiederum in Schritt S40 die nächste Endposition angefahren, wobei im Ausführungsbeispiel zur kompakteren Darstellung End- und Synchronisierpositionen zusammenfallen.

Stellt das System bzw. Verfahren in Schritt S30 fest, dass für keinen anderen Roboter der Roboteranordnung eine Aufsetzposition $x_{en}$ ermittelt worden ist (S30: "N"), wird direkt in Schritt S40 die nächste Endposition angefahren.

Obwohl in der vorhergehenden Beschreibung exemplarische Ausführungen erläutert wurden, sei darauf hingewiesen, dass eine Vielzahl von Abwandlungen möglich ist.

So wurde das Verfahren exemplarisch für zwei synchronisierte Roboter 10, 20 erläutert. Wird es nur für einen einzelnen Roboter, beispielsweise den ersten Roboter 10, durchgeführt, können entsprechend die Schritte S30, S90 und S100 entfallen bzw. die nächste Endposition direkt angefahren werden, wenn festgestellt wird, dass die aktuelle Position noch auf dem aktuellen Bahnabschnitt liegt (S20: "Y").

Zusätzlich oder alternativ kann auch Schritt S50 entfallen, d.h. bei Abweichung der aktuellen Position von dem aktuellen Bahnabschnitt stets eine Aufsetzposition ermittelt und - gegebenenfalls erst nach Erhalt eines (weiteren) Startbefehls - angefahren werden.

Bezugszeichenliste

| 10 | (erster) Roboter |
| 11 | Steuerung (System) |
| 20 | weiterer Roboter |
| 21 | Steuerung (System) |

| $q_{i,j}$ | Gelenkkoordinaten (i=1, 2; j=1,...,3) |
| $x_{a(1)}$, $x_{a2}$ | aktuelle Position |
| $x_{i,ej}$ | End-/Synchronisierposition (i=1, 2; j=1,...,3) |
| $Y_{i,j}$ | Bahnabschnitt (i=1, 2; j=1,...,3) |
| $x_n$ | Aufsetzposition |
| $x_s$ | synchronisierte weitere Aufsetzposition |
| $Y_{a(1)}$, $Y_{a2}$ | aktueller Bahnabschnitt |

**Patentansprüche**

1. Verfahren zum wenigstens teilweise automatisierten Abfahren einer vorgegebenen Bahn mit einem Roboter (10), mit den Schritten:

   Ermitteln (S70) einer Aufsetzposition ($x_n$) auf einem aktuellen Bahnabschnitt ($Y_{a1}$) der vorgegebenen Bahn, für die eine Abstandskenngröße, welche auf Basis eines Abstands einer aktuellen Position ($x_{a1}$) des Roboters zu dem aktuellen Bahnabschnitt definiert ist, eine vorgegebene Bedingung erfüllt, wobei der aktuelle Bahnabschnitt ein als nächstes abzufahrender Bahnabschnitt der vorgegebenen Bahn ist und die Abstandskenngröße die vorgegebene Bedingung erfüllt, sofern sie kleiner oder gleich der Abstandskenngröße für alle Positionen in einem Teilbereich des aktuellen Bahnabschnitts ist; und
   Anfahren (S80) der Aufsetzposition mit dem Roboter, sofern eine Aufsetzbedingung erfüllt ist.

2. Verfahren nach Anspruch 1, **dadurch gekennzeichnet, dass** die Aufsetzbedingung eine Abweichung der aktuellen Position des Roboters von dem aktuellen Bahnabschnitt umfasst (S20).

3. Verfahren nach einem der vorhergehenden Ansprüche, **dadurch gekennzeichnet, dass** die Aufsetzbedingung eine Abweichung einer, insbesondere bei einer Unterbrechung des Abfahrens der vorgegebenen Bahn, abgespeicherte Rückkehrposition ($x_r$) des Roboters von dem aktuellen Bahnabschnitt umfasst (S50).

4. Verfahren nach einem der vorhergehenden Ansprüche, **dadurch gekennzeichnet, dass** der aktuelle Bahnabschnitt durch Modifikation, insbesondere Substitution, eines abgespeicherten Bahnabschnitts ($Y_{1,2}$) der vorgegebenen Bahn vorgegeben ist.

5. Verfahren nach einem der vorhergehenden Ansprüche, **dadurch gekennzeichnet, dass** der aktuelle Bahnabschnitt durch einen Sprung zu einem abgespeicherten Bahnabschnitt der vorgegebenen Bahn vorgegeben ist.

6. Verfahren nach einem der vorhergehenden Ansprüche, **dadurch gekennzeichnet, dass** die Aufsetzposition auf einer linearen Bahn ($d$) im Arbeits- oder Gelenkkoordinatenraum angefahren wird.

7. Verfahren nach einem der vorhergehenden Ansprüche, **dadurch gekennzeichnet, dass** der Roboter von der Aufsetzposition zu einer Endposition ($x_{1,e2}$)

des aktuellen Bahnabschnitts auf dem aktuellen Bahnabschnitt verfahren wird.

8. Verfahren zum wenigstens teilweise automatisierten synchronisierten Abfahren einer vorgegebenen Bahngruppe mit wenigstens zwei Robotern (10, 20), wobei eine vorgegebene erste Bahn der Bahngruppe mit einem ersten (10) der Roboter nach einem Verfahren nach einem der vorhergehenden Ansprüche abgefahren wird und wenigstens eine weitere vorgegebene Bahn der Bahngruppe mit einem weiteren (20) der Roboter synchronisiert abgefahren wird.

9. Verfahren nach Anspruch 8, **dadurch gekennzeichnet, dass** eine zu der Aufsetzposition ($x_n$) des ersten Roboters synchronisierte weitere Aufsetzposition ($x_s$) des weiteren Roboters auf der weiteren Bahn ermittelt (S90) und mit dem weiteren Roboter, insbesondere auf der weiteren Bahn oder auf einer linearen Bahn im Arbeits- oder Gelenkkoordinatenraum, angefahren (S100) wird.

10. System (11) zum wenigstens teilweise automatisierten Abfahren einer vorgegebenen Bahn mit einem Roboter (10), das zur Durchführung eines Verfahrens nach einem der vorhergehenden Ansprüche eingerichtet ist.

11. System (11, 21) zum wenigstens teilweise automatisierten synchronisierten Abfahren einer vorgegebenen Bahngruppe mit wenigstens zwei Robotern (10, 20), das zur Durchführung eines Verfahrens nach einem der vorhergehenden Ansprüche eingerichtet ist und/oder aufweist:

    ein System (11) nach Anspruch 10 zum Abfahren einer vorgegebenen Bahn der Bahngruppe mit einem (10) der Roboter, und
    Mittel (21) zum synchronisierten Abfahren wenigstens einer weiteren vorgegebenen Bahn der Bahngruppe mit einem weiteren (20) der Roboter.

12. Roboteranordnung mit wenigstens einem Roboter (10, 20) und einem System (11, 21) nach einem der vorhergehenden Ansprüche 10 - 11.

13. Computerprogrammprodukt mit einem Programmcode, der auf einem von einem Computer lesbaren Medium gespeichert ist, zur Durchführung eines Verfahrens nach einem der vorhergehenden Ansprüche 1 - 9.

**Claims**

1. A method of carrying out a movement along a specified path with a robot (10) in an at least partially automated manner, wherein the method comprises the following steps:

    determining (S70) a deployment position ($x_n$) on a current path portion ($Y_{a1}$) of the specified path, for which a distance parameter, which is defined on the basis of a distance between a current position ($x_{a1}$) of the robot and the current path portion, satisfies a predetermined condition, wherein the current path portion is a path portion of the specified path on which a movement is to be carried out next, and wherein the distance parameter satisfies the predetermined condition as long as is less than, or equal to, the distance parameter for all positions in a sub-portion of the current path portion; and
    carrying out a movement (S80) to the deployment position with the robot as long as a deployment condition is satisfied.

2. The method according to claim 1, **characterised in that** the deployment condition comprises a deviation of the current position of the robot from the current path portion (S20).

3. The method according to any one of the preceding claims, **characterised in that** the deployment condition comprises a deviation of a stored return position ($x_r$) of the robot from the current path portion, in particular in the case of an interruption of the movement along the specified path (S50).

4. The method according to any one of the preceding claims, **characterised in that** the current path portion is specified as a result of a modification, in particular a substitution, of a stored path portion ($Y_{1,2}$) of the specified path.

5. The method according to any one of the preceding claims, **characterised in that** the current path portion is specified by a jump to a stored path portion of the specified path.

6. The method according to any one of the preceding claims, **characterised in that** the movement to the deployment position is carried out on a linear path ($d$) in the working space or in the joint coordinate space.

7. The method according to any one of the preceding claims, **characterised in that** the robot is moved on the current path portion from the deployment position to an end position ($x_{1,e2}$) of the current path portion.

8. A method of carrying out a synchronised movement along a specified group of paths with at least two robots (10, 20) in an at least partially automated manner, wherein a movement along a specified first path of the group of paths is carried out with a first one (10) of the robots according to a method according to any one of the preceding claims, and a movement along at least one further specified path of the group of paths is carried out with a further one (20) of the robots in a synchronised manner.

9. The method according to claim 8, **characterised in that** a further deployment position ($x_s$) of the further robot on the further path, which further deployment position ($x_s$) is synchronised with the deployment position ($x_n$) of the first robot, is determined (S90), and that a movement to the further deployment position ($x_s$) is carried out (S100) with the further robot, in particular on the further path or on a linear path in the working space or in the joint coordinate space.

10. A system (11) for carrying out a movement along a specified path with a robot (10) in an at least partially automated manner, which system (11) is set up for carrying out a method according to any one of the preceding claims.

11. A system (11, 21) for carrying out a synchronised movement along a specified group of paths with at least two robots (10, 20) in an at least partially automated manner, which system (11, 21) is set up for carrying out a method according to any one of the preceding claims and / or which comprises:

> a system (11) according to claim 10 for carrying out a movement along a specified path of the group of paths with one (10) of the robots; and means (21) for carrying out a synchronised movement along at least one further specified path of the group of paths with a further one (20) of the robots.

12. A robot arrangement comprising at least one robot (10, 20) and a system (11, 21) according to any one of the preceding claims 10 - 11.

13. A computer program product which comprises a program code which is stored on a medium that can be read by a computer, for carrying out a method according to any one of the preceding claims 1 - 9.

## Revendications

1. Procédé de transport au moins en partie automatisé d'une voie prédéfinie avec un robot (10), avec les étapes :

> de détermination (S70) d'une position de pose ($X_n$) sur un tronçon de voie actuel ($Y_{a1}$) de la voie prédéfinie, pour laquelle une grandeur caractéristique de distance, qui est définie sur la base d'une distance d'une position actuelle ($X_{a1}$) du robot par rapport au tronçon de voie actuel, remplit une condition prédéfinie, dans lequel le tronçon de voie actuel est un tronçon de voie à transporter ensuite de la voie prédéfinie et la grandeur caractéristique de distance remplit la condition prédéfinie dans la mesure où elle est inférieure ou égale à la grandeur caractéristique de distance pour toutes les positions dans une sous-zone du tronçon de voie actuel ; et d'approche (S80) de la position de pose avec le robot, dans la mesure où une condition de pose est remplie.

2. Procédé selon la revendication 1, **caractérisé en ce que** la condition de pose comprend (S20) un écart de la position actuelle du robot par rapport au tronçon de voie actuel.

3. Procédé selon l'une quelconque des revendications précédentes, **caractérisé en ce que** la condition de pose comprend (S50) un écart d'une position de retour ($X_r$) sauvegardée du robot par rapport au tronçon de voie actuel, en particulier en cas d'interruption du transport de la voie prédéfinie.

4. Procédé selon l'une quelconque des revendications précédentes, **caractérisé en ce que** le tronçon de voie actuelle est prédéfini par modification, en particulier par substitution, d'un tronçon de voie ($Y_{1,2}$) sauvegardé de la voie prédéfinie.

5. Procédé selon l'une quelconque des revendications précédentes, **caractérisé en ce que** le tronçon de voie actuel est prédéfini par un saut vers un tronçon de voie sauvegardé de la voie prédéfinie.

6. Procédé selon l'une quelconque des revendications précédentes, **caractérisé en ce que** la position de pose est approchée sur une voie linéaire ($d$) dans l'espace de coordonnées de travail ou d'articulation.

7. Procédé selon l'une quelconque des revendications précédentes, **caractérisé en ce que** le robot est déplacé de la position de pose vers une position finale ($X_{1,e2}$) du tronçon de voie actuel sur le tronçon de voie actuel.

8. Procédé de transport synchronisé au moins en partie automatisé d'un groupe de voies prédéfini avec au moins deux robots (10, 20), dans lequel une première voie prédéfinie du groupe de voies est transportée avec un premier (10) des robots selon un procédé selon l'une quelconque des revendications précédentes et au moins une autre voie prédéfinie du groupe de voies est transportée de manière synchronisée avec un autre (20) des robots.

**9.** Procédé selon la revendication 8, **caractérisé en ce qu'**une autre position de pose ($X_s$) synchronisée de l'autre robot par rapport à la position de pose ($X_n$) du premier robot est déterminée (S90) sur l'autre voie et est approchée (S100) avec l'autre robot, en particulier sur l'autre voie ou sur une voie linéaire dans l'espace de coordonnées de travail ou d'articulation.

**10.** Système (11) de transport au moins en partie automatisé d'une voie prédéfinie avec un robot (10), qui est configuré pour mettre en œuvre un procédé selon l'une quelconque des revendications précédentes.

**11.** Système (11, 21) de transport synchronisé au moins en partie automatisé d'un groupe de voies prédéfini avec au moins deux robots (10, 20), qui est configuré et/ou présentant pour mettre en œuvre un procédé selon l'une quelconque des revendications précédentes et/ou présente :

un système (11) selon la revendication 10 pour transporter une voie prédéfinie du groupe de trajectoires avec un (10) des robots ; et des moyens (21) de transport synchronisé d'au moins une autre voie prédéfinie du groupe de voies avec un autre (20) des robots.

**12.** Ensemble robotisé avec au moins un robot (10, 20) et un système (11, 21) selon l'une quelconque des revendications précédentes 10 à 11.

**13.** Produit-programme d'ordinateur avec un code de programme qui est stocké sur un support lisible par un ordinateur pour mettre en œuvre un procédé selon l'une quelconque des revendications précédentes 1 à 9.

# Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2007142967 A1